# EUROPÄISCHE PATENTSCHRIFT

(11) **EP 0 787 153 B1**
(45) Veröffentlichungstag und Bekanntmachung des Hinweises auf die Patenterteilung: **29.12.1997**
(21) Anmeldenummer: 96926964.6
(22) Anmeldetag: 16.08.1996
(51) Int. Cl.: C08B 1/00, D01F 2/00, D01F 13/02

(54) **VERFAHREN ZUR AUFARBEITUNG EINER WÄSSRIGEN PROZESSFLÜSSIGKEIT DES AMINOXIDVERFAHRENS**
PROCESS FOR RE-USING AN AQUEOUS PROCESS FLUID FROM THE AMINE OXIDE PROCESS
PROCEDE POUR REUTILISER UN LIQUIDE DE TRAITEMENT AQUEUX ISSU DU PROCEDE A L'OXYDE D'AMINE

(30) Priorität: 18.08.1995 AT 1398/95
(43) Veröffentlichungstag der Anmeldung: 06.08.1997
(73) Patentinhaber: LENZING AKTIENGESELLSCHAFT, 4860 Lenzing (AT)
(72) Erfinder: KALT, Wolfram, A-4860 Lenzing (AT); EICHINGER, Dieter, A-4840 Vöcklabruck (AT); MANGENG, Bruno, A-4863 Seewalchen (AT); FIRGO, Heinrich, A-4840 Vöcklabruck (AT)
(74) Vertreter: Schwarz, Albin, Dr. Kopecky & Schwarz Patentanwälte
(86) Internationale Anmeldenummer: AT9600150
(87) Internationale Veröffentlichungsnummer: WO9707138

(56) Entgegenhaltungen:
- Keine einschlägigen Dokumente gefunden

## Beschreibung

Die vorliegende Erfindung betrifft ein Verfahren zur Aufarbeitung einer wäßrigen Prozeßflüssigkeit des Aminoxidverfahrens, welche N-Methylmorpholin und Morpholin enthält.

Seit einigen Jahrzehnten wird nach Verfahren zur Herstellung cellulosischer Formkörper gesucht, welche das heute in großem Maßstab angewendete Viskoseverfahren ersetzen sollen. Als eine nicht zuletzt wegen einer besseren Umweltverträglichkeit interessante Alternative hat sich dabei herauskristallisiert, Cellulose ohne Derivatisierung in einem organischen Lösungsmittel aufzulösen und aus dieser Lösung Formkörper, z.B. Fasern, Folien und anderen Formkörpern, zu extrudieren. Solcherart extrudierte Fasern erhielten von der BISFA (The International Bureau for the Standardization of man made fibers) den Gattungsnamen Lyocell. Unter einem organischen Lösungsmittel wird von der BISFA ein Gemisch aus einer organischen Chemikalie und Wasser verstanden.

Es hat sich herausgestellt, daß sich als organisches Lösungsmittel insbesondere ein Gemisch aus einem tertiären Aminoxid und Wasser sehr gut zur Herstellung von cellulosischen Formkörpern eignet. Als Aminoxid wird dabei in erster Linie N-Methylmorpholin-N-oxid (NMMO) verwendet. Andere Aminoxide sind z.B. in der EP-A - 0 553 070 beschrieben. Ein Verfahren zur Herstellung formbarer Celluloselösungen ist z.B. aus der EP-A - 0 356 419 bekannt. Die Herstellung cellulosischer Formkörper unter Anwendung tertiärer Aminoxide wird für die Zwecke der vorliegenden Beschreibung und der vorliegenden Patentansprüche allgemein als Aminoxidverfahren bezeichnet.

In der EP-A - 0 356 419 ist ein Aminoxidverfahren zur Herstellung spinnbarer Celluloselösungen beschrieben, welches als Ausgangsmaterial u.a. eine Suspension von Cellulose in flüssigem, wäßrigem N-Methylmorpholin-N-oxid (NMMO) verwendet. Dieses Verfahren besteht darin, daß die Suspension in einem Dünnschichtbehandlungsapparat einstufig und kontinuierlich in eine formbare Lösung übergeführt wird. Die formbare Lösung wird schließlich in einem Formwerkzeug, z.B einer Spinndüse, zu Filamenten versponnen, die durch ein Fällbad geführt werden.

Im Fällbad wird die Cellulose ausgefällt. Das tertiäre Aminoxid reichert sich im Fällbad an. Der Gehalt an Aminoxid im Fällbad kann dabei bis zu 30 Gew.-% betragen. Für die Wirtschaftlichkeit des Aminoxidverfahrens ist es von entscheidender Bedeutung, das Aminoxid möglichst vollständig zurückzugewinnen und neuerlich zur Herstellung einer formbaren Celluloselösung zu verwenden. Es ist somit erforderlich, aus dem Fällbad NMMO rückzugewinnen.

Mit dem Aminoxid reichern sich im Fällbad jedoch auch Abbauprodukte des Aminoxidverfahrens an. Diese Abbauprodukte können stark gefärbt sein und damit die Qualität der hergestellten cellulosischen Formkörper beeinträchtigen. Andere Stoffe wiederum können zusätzlich ein Sicherheitsrisiko darstellen, da das Aminoxid unter gewissen Bedingungen zu stark exothermen Zersetzungsreaktionen neigt und diese Zersetzungsreaktionen von bestimmten Stoffen induziert oder beschleunigt werden können. Diese Stoffe müssen vor der Konzentrierung und Abtrennung von NMMO aus dem aufzuarbeitenden Fällbad entfernt werden.

Nach dem Entfernen dieser unerwünschten Stoffe wird aus dem gereinigten Fällbad, welches gegebenenfalls mit anderen Prozeßwässern des Aminoxidverfahrens, wie z.B. Brüdenkondensaten, die bei der Herstellung der Celluloselösung anfallen, vereinigt wird, Wasser abgezogen. Dies kann beispielsweise durch Eindampfen geschehen. Im Sumpf dieser Eindampfung fällt hochkonzentriertes, wäßriges Aminoxid an, welches wieder in das Aminoxidverfahren rezykliert wird. Die Brüden der Eindampfung bestehen hauptsächlich aus Wasser, in welchem aber auch erhebliche Mengen an N-Methylmorpholin, das hauptsächliche Abbauprodukt des NMMO, gelöst sind. Ferner sind in den Brüden auch NMMO und Morpholin zu finden. Die Brüden enthalten pro Liter typischerweise bis zu 100 mg NMMO, 240 mg N-Methylmorpholin und 30 mg Morpholin. Diese Brüden werden zweckmäßigerweise konzentriert, beispielsweise durch Umkehrosmose. Die erhaltene wäßrige Lösung enthält typischerweise bis zu 4 g NMMO, bis zu 10 g N-Methylmorpholin und bis zu etwa 1 g Morpholin.

Um die Verluste an NMMO möglichst gering zu halten, ist man bemüht, das N-Methylmorpholin wieder zu NMMO zu oxidieren. Dies gelingt beispielsweise mit einem peroxidischen Oxidationsmittel.

Ein Verfahren zur präparativen Herstellung von tertiären Aminoxiden durch Oxidation von tertiären Aminen ist beispielsweise aus der EP-A - 0 092 862 bekannt. Gemäß diesem Verfahren wird das Aminoxid in einem wäßrigen Lösungsmittel mit molekularem Sauerstoff unter Druck oxidiert, welches Lösungsmittel einen pH-Wert aufweist, der etwa gleich hoch oder höher als der pKa-Wert des tertiären Amins ist.

Die DD-A - 259 863 betrifft die Herstellung wäßriger NMMO-Lösungen durch Oxidation von N-Methylmorpholin mit H₂O₂ und Leiten der Reaktionslösung über eine oder mehrere Austauschersäulen, die mit sulfonatgruppenhaltigem Styrol/Divinylbenzol-Copolymerisat gefüllt sind, sowie durch Einstellen eines pH-Wertes der Lösung auf Werte zwischen 8 und 5 durch Zusatz von Phosphorsäure.

Bei einer Oxidation ist nachteilig, daß im Prozeßwasser vorhandenes Morpholin, welches als Verunreinigung mit den tertiären Aminen eingeschleppt wird, teilweise zu toxischem N-Nitrosomorpholin umgesetzt wird, welches sich im NMMO-Kreislauf unerwünscht anreichert. Bei den Oxidationsreaktionen werden zusätzlich auch andere Nitrosamine gebildet.

Die Oxidation von N-Methylmorpholin mit H₂O₂ zu NMMO ist z.B. aus der EP-A - 0 254 803 bekannt. Aus der DE-A -4 140 259 ist die Herstellung von NMMO bekannt, bei welchem Verfahren die Bildung von Nitrosaminen hintangehalten wird, indem primäre und sekundäre Amine z.B. mit Säurehalogeniden abgefangen werden. Die EP-A - 0 320 690 beschreibt die Herstellung von im wesentlichen nitrosaminfreien Aminoxiden durch Oxidation mittels Peroxiden in Gegenwart einer Kombination von CO₂/Ascorbinsäure, welche als Nitrosamininhibitor wirkt. Aus der EP-A - 0 401 503 ist die Oxidation mit H₂O₂ in Wasser und einem Cosolvens, vorzugsweise ein Carbonsäureester, bekannt. Gemäß der FR-A - 8 808 039 wird die Oxidation unter Zusatz von CO₂ durchgeführt, und gemäß der US-A - 5,216,154 wird die Oxidation zu NMMO in reiner CO₂-Atmosphäre durchgeführt.

Die Hintanhaltung der Bildung von Nitrosaminen wird im Stand der Technik entweder nicht erreicht, oder sie wird durch Verbrauch der Ausgangsprodukte des N-Nitrosomorpholins oder durch Zusätze zur Verlangsamung der N-Nitrosomorpholin-Bildungsrate erzielt. Insbesondere in einem Aminoxidverfahren, welches einen geschlossenen Kreislauf darstellt, bedingt die Zugabe von diversen Chemikalien, wie z.B. Säurehalogenide oder Ascorbinsäure bzw. auch CO₂, zum Prozeß Probleme bei der Reinigung der Prozeßwässer, da die aus den zugesetzten Chemikalien stammenden Abbauprodukte aus dem Verfahren entfernt werden müssen. Bei vielen Chemikalien sind auch Sicherheitsaspekte in Bezug auf die Gefahr von Exothermien zu berücksichtigen. Daher sind alle diese Varianten für die Aufarbeitung von Prozeßwässern des Aminoxidverfahrens ungeeignet.

Die vorliegende Erfindung setzt sich daher zum Ziel, ein Verfahren zur Aufarbeitung von Prozeßwässern bereitzustellen, mit welchem auf einfache Weise N-Methylmorpholin zu NMMO oxidiert wird, wobei eine Bildung des toxischen N-Nitrosomorpholins zurückgedrängt werden soll. Dies soll nicht mit chemischen Zusätzen bewirkt werden, welche z.B. Morpholin, das Ausgangsprodukt für die Bildung des N-Nitrosomorpholins, z.B. durch Derivatisierung abfangen. Die vorliegende Erfindung stellt sich ferner die Aufgabe, dieses Verfahren so auszugestalten, daß auch die geringen Mengen an N-Nitrosomorpholin, die sich während der Oxidation bilden, ohne chemische Zusätze weitgehend zerstört werden.

Das Ziel, ein Verfahren zur Aufarbeitung von Prozeßwässern bereitzustellen, mit welchem N-Methylmorpholin zu NMMO oxidiert wird, wobei die Bildung des toxischen N-Nitrosomorpholins zurückgedrängt wird, wird mit einem Verfahren erreicht, bei welchem
(a) eine wäßrige Lösung vorgesehen wird, welche N-Methylmorpholin und Morpholin enthält und einen pH-Wert zwischen 6,0 und 9,0 aufweist, wonach
(b) diese wäßrige Lösung mit einem peroxidischen Oxidationsmittel behandelt wird, um N-Methylmorpholin zu N-Methylmorpholin-N-oxid zu oxidieren.

Es hat sich gezeigt, daß es einfach durch pH-Einstellung des Oxidationsgemisches in den genannten Bereich möglich ist, die Bildung des toxischen N-Nitrosomorpholins zurückzudrängen und gleichzeitig ein Maximum an Oxidation von N-Methylmorpholin zu NMMO zu erreichen. Die pH-Abhängigkeit dieser beiden Reaktionswege ist in den beigefügten Abbildungen zu sehen.

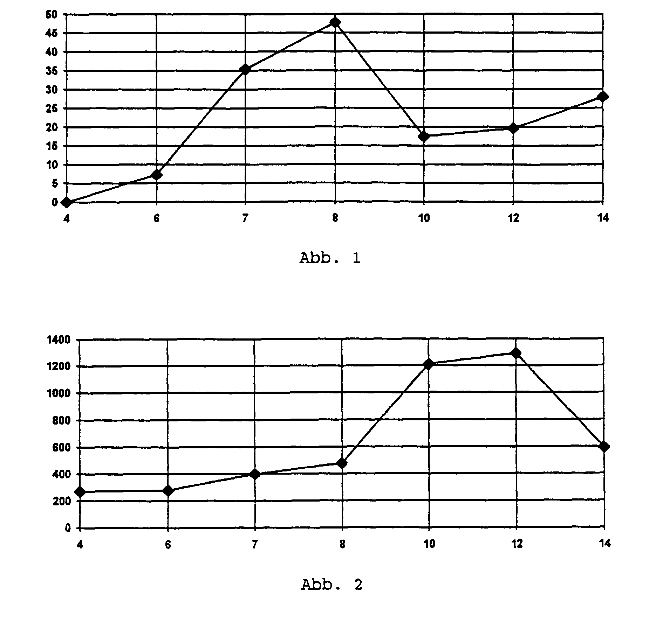

Die Abbildung 1 zeigt die Ausbeute an gebildetem NMMO (% der Theorie) in Abhängigkeit vom pH-Wert der Lösung, wobei im Bereich zwischen 6,0 und 9,0 ein Maximum vorliegt, das im vorliegenden Beispiel etwa 50% ist. Die Abb. 2 zeigt die Konzentration (in ppb) an N-Nitrosomorpholin in der Lösung nach Oxidation in Abhängigkeit vom pH-Wert. Es ist zu sehen, daß ab einem pH-Wert von 8-9 die Bildung des N-Nitrosomorpholins ansteigt und erst ab pH 10 ein Maximum erreicht. Indem nun erfindungsgemäß in der zu oxidierenden Lösung ein pH-Wert im Bereich zwischen 6,0 und 9,0 eingestellt wird, kann die Gewinnung von NMMO maximiert und gleichzeitig die Bildung des toxischen N-Nitrosomorpholins minimiert werden.

Es hat sich als äußerst vorteilhaft erwiesen, den pH-Wert der wäßrigen Lösung in den gewünschten Bereich zu bringen, indem die aufzuarbeitende Lösung über einen Kationenaustauscher geführt wird, welcher Morpholin absorbieren kann. Diese Maßnahme bewirkt zwei wichtige Effekte hinsichtlich der Reduzierung von Nitrosaminen. Durch den Kationenaustauscher wird Morpholin selektiv aus der Lösung entfernt, wodurch für die Neubildung von Nitrosaminen praktisch kein Morpholin mehr zur Verfügung steht. Durch die Abtrennung des im Vergleich zu den anderen Komponenten die höchste Basizität aufweisenden Morpholins wird zusätzlich der pH-Wert der Lösung eben in jenen Bereich gesenkt, in welchem die Bildung von NMMO hohe Werte erreicht, die Bildung von Nitrosaminen aber noch weiter gehemmt wird.

Der Kationenaustauscher weist zweckmäßigerweise Carboxylgruppen oder Sulfonsäuregruppen auf.

Das Ziel, das erfindungsgemäße Verfahren so auszugestalten, daß auch die geringen Mengen an N-Nitrosomorpholin, die sich während der Oxidation bilden, ohne chemische Zusätze weitgehend zerstört werden, kann erreicht werden, indem die wäßrige Lösung während oder nach der Behandlung mit dem peroxidischen Oxidationsmittel mit ultraviolettem Licht bestrahlt wird, das im wesentlichen eine Wellenlänge von 254 nm aufweist.

Es hat sich gezeigt, daß durch die bevorzugte Ausgestaltung des erfindungsgemäßen Verfahrens, den pH-Wert mittels eines Kationenaustauschers einzustellen, eine Neubildung von N-Nitrosomorpholin in der nachfolgenden Oxidation praktisch nicht erfolgt, da die pH-Einstellung darauf beruht, daß Morpholin selektiv entfernt wird. In diesem Fall dient die erfindungsgemäße Bestrahlung dem Zweck, den gewissen, im Verfahren befindlichen Grundpegel an N-Nitrosomorpholin zu zerstören.

Es hat sich ferner gezeigt, daß die erfindungsgemäße Bestrahlung eine äußerst wirksame Zerstörung des N-Nitrosomorpholins gestattet, und daß die Gegenwart des peroxidischen Oxidationsmittels diese Zerstörung nicht beeinträchtigt.

Die Bestrahlungsleistung kann z.B. 200 bis 500 mJ/cm² betragen und ist von der Konstruktion der Lampe und von den Prozeßbedingungen, insbesondere der Temperatur, abhängig. Auch diese Ausgestaltung des erfindungsgemäßen Verfahrens kommt ganz ohne zusätzliche Chemikalien aus.

Es sind Arbeitsvorschriften zur quantitativen Analyse von Nitrosaminen bekannt, welche eine UV-Bestrahlung und eine anschließende Bestimmung der entstandenen Nitrite anwenden (D.E.G. Shuker, S.R. Tannenbaum, Anal. Chem., 1983, 55, 2152-2155; M. Rhighezza, M.H. Murello, A.M. Siouffi, J. Chromat., 1987, 410, 145-155; J.J. Conboy, J.H. Hotchkiss, Analyst, 1989, 114, 155-159; B. Büchele, L. Hoffmann, J. Lang, Fresen.J.Anal.Chem., 1990, 336, 328-333). Diese analytischen Arbeitsvorschriften behandeln jedoch nicht die Zerstörung von N-Nitrosomorpholin.

Als peroxidisches Oxidationsmittel wird im erfindungsgemäßen Verfahren bevorzugt H₂O₂ eingesetzt. Das H₂O₂ wird vorzugsweise in Form einer wäßrigen Lösung mit 30-50 Gew.-% H₂O₂ eingesetzt. Das H₂O₂ wird am besten in einer Menge von 0,8 bis 2 Mol pro Mol N-Methylmorpholin eingesetzt.

Das ultraviolette Licht, mit welchem die wäßrige Lösung bestrahlt wird, stammt am besten von einer Quecksilber-Niederdrucklampe. Diese Niederdrucklampen besitzen ein Intensitätsmaximum bei 254 nm.

Zur erfindungsgemäßen Bestrahlung mit einer Niederdrucklampe kann die Lampe in den Behälter, welcher das zu behandelnde Prozeßwasser enthält, eingehängt werden. Die Lampe kann aber auch auf eine andere Weise angeordnet werden. Ferner kann die Bestrahlung beispielsweise auch während eines kontinuierlichen Umpumpens der zu bestrahlenden Lösung in einem Dünnfilm-UV-Reaktor vorgenommen werden.

Eine weitere bevorzugte Ausgestaltung des erfindungsgemäßen Verfahrens weist folgende Schritte auf, daß
(1) die oben erwähnten, beispielsweise mittels Umkehrosmose konzentrierten Brüden über einen Kationenaustauscher geleitet werden, der Morpholin selektiv adsorbieren kann und sicherstellt, daß der pH-Wert im Bereich von 6,0 bis 9,0 ist, worauf
(2) das aus dem Kationenaustauscher erhaltene Eluat mit gereinigtem Fällbad des Aminoxidverfahrens vereinigt wird, welches Fällbad 10-30 Gew.-% NMMO enthält, und
(3) das mit dem Fällbad vereinigte Eluat in einem Eindampfungsreaktor mit dem peroxidischen Oxidationsmittel behandelt wird, um N-Methylmorpholin zu oxidieren und um aufzukonzentrieren, wobei konzentriertes, wäßriges NMMO, das neuerlich in das Aminoxidverfahren rückgeführt wird, und Brüden erhalten werden, welche kondensiert und im Schritt (1) eingesetzt werden.

Mit den nachfolgenden Beispielen wird die Erfindung näher erläutert. Die im Folgenden verwendeten Abkürzungen NMOR, NMMO, NMM und M stehen für N-Nitrosomorpholin, N-Methylmorpholin-N-oxid, N-Methylmorpholin bzw. Morpholin.

### Beispiel 1

7 wäßrige Lösungen (50 ml) mit 284 ppb NMOR, welche pro Liter 6097 mg NMM, 272 mg M und 1085 mg NMMO enthielten, wurden mit HCl/NaOH auf die pH-Werte 4, 6, 7, 8, 10, 12 und 14 gebracht. Danach wurde wäßriges Wasserstoffperoxid mit 30 Gew.-% H₂O₂ in einer Menge zugegeben, um einen Überschuß von 1,3 Mol, bezogen auf NMM, zu erreichen, und 4 Stunden auf 50°C erwärmt. Anschließend wurde die Ausbeute an neu gebildetem NMMO und die Konzentration an NMOR mittels HPLC (siehe Beispiel 2) bestimmt. Die Ergebnisse sind in den Abbildungen 1 und 2 graphisch dargestellt.

In der Abbildung 1 ist als Abszisse der pH-Wert und als Ordinate die Ausbeute an gebildetem NMMO (% der Theorie) angegeben. Es ist klar zu erkennen, daß im Bereich zwischen 6,0 und 9,0 ein Maximum mit etwa 50% vorliegt. In der Abb. 2 ist als Abszisse ebenfalls der pH-Wert und als Ordinate die Konzentration (in ppb) an NMOR in der Lösung nach Oxidation angebenen. Es ist zu sehen, daß erst ab einem pH-Wert von 8-9 die Bildung des N-Nitrosomorpholins stark ansteigt. Im Bereich zwischen 6,0 und 9,0 ist somit die Bildung von NMMO maximiert und gleichzeitig die Bildung des toxischen N-Nitrosomorpholins minimiert. Dies gilt insbesondere für den pH-Bereich zwischen 7,0 und 9,0.

### Beispiel 2

Eine wäßrige Lösung, welche pro Liter 25 µg NMOR, 2530 mg NMMO, 3923 mg NMM und 30 mg M enthielt, wurde zur Oxidation von NMM zu NMMO mit 30%-igem H₂O₂ versetzt (Mol NMM/Mol H₂O₂ = 1/1,2) und in einem UV-Reaktor mit einer Quecksilber-Niederdrucklampe (Type Katadyn UV-Strahler EK-36, Nr. 79000; Hersteller: Katadyn) bestrahlt (Wellenlänge: 254 nm). Die Temperatur des Prozeßwassers war 50°C.

Die Konzentration an NMOR wurde mittels HPLC (Säule: Hypersil ODS 250 x 4 mm; 50°C; Laufmittel: A = 0,6% Acetonitril; B = 49,7% H₂O; Gradient 1 ml/min; 10 min. - 100% A; 7 min - 100% B; Detektor: UV 238 nm) bestimmt.

Innerhalb der ersten 90 Minuten stieg die NMOR-Konzentration auf 45 µg/l an, was auf eine schnelle Reaktion des in der Lösung befindlichen M zurückzuführen ist. Anschließend nahm die Konzentration an NMOR jedoch stark ab. Nach 6 Stunden war kein NMOR mehr nachweisbar.

Nach einer Gesamt-Oxidationszeit von 20 Stunden enthielt die Lösung 5386 mg NMMO/Liter. Dies entspricht einer Ausbeute von 62% der Theorie.

## Patentansprüche

1. Verfahren zur Herstellung einer Lösung von N-Methylmorpholin-N-oxid in Wasser, gekennzeichnet durch die folgenden Schritte, daß
(a) eine wäßrige Lösung vorgesehen wird, welche N-Methylmorpholin und Morpholin enthält und einen pH-Wert zwischen 6,0 und 9,0 aufweist, wonach
(b) diese wäßrige Lösung mit einem peroxidischen Oxidationsmittel behandelt wird, um N-Methylmorpholin zu N-Methylmorpholin-N-oxid zu oxidieren.

2. Verfahren nach Anspruch 1, dadurch gekennzeichnet, daß im Schritt (a) eine wäßrige Lösung eingesetzt wird, die zur Einstellung des pH-Wert über einen Kationenaustauscher geführt wurde, welcher Morpholin absorbieren kann.

3. Verfahren nach Anspruch 2, dadurch gekennzeichnet, daß der Kationenaustauscher Carboxylgruppen aufweist.

4. Verfahren nach Anspruch 2, dadurch gekennzeichnet, daß der Kationenaustauscher Sulfonsäuregruppen aufweist.

5. Verfahren nach einem der Ansprüche 1 bis 4, dadurch gekennzeichnet, daß die wäßrige Lösung während oder nach der Behandlung mit dem peroxidischen Oxidationsmittel mit ultraviolettem Licht bestrahlt wird, das im wesentlichen eine Wellenlänge von 254 nm aufweist.

6. Verfahren nach Anspruch 5, dadurch gekennzeichnet, daß das ultraviolette Licht von einer Quecksilber-Niederdrucklampe stammt.

7. Verfahren nach einem der Ansprüche 1 bis 6, dadurch gekenzeichnet, daß als wäßrige Lösung, welche Morpholin und N-Methylmorpholin enthält, Prozeßwässer aus dem Aminoxidverfahren eingesetzt werden.

## Claims

1. Process for producing a solution of N-methylmorpholine N-oxide in water, characterized by the following steps that
(a) an aqueous solution is provided which contains N-methylmorpholine and morpholine and has a pH of between 6.0 and 9.0, after which
(b) said aqueous solution is treated with a peroxidic oxidizing agent in order to oxidize N-methylmorpholine to N-methylmorpholine N-oxide.

2. Process according to Claim 1, characterized in that, in step (a), an aqueous solution is used which, to adjust the pH has been fed via a cation exchanger which can absorb morpholine.

3. Process according to Claim 2, characterized in that the cation exchanger contains carboxyl groups.

4. Process according to Claim 2, characterized in that the cation exchanger contains sulphonic acid groups.

5. Process according to one of Claims 1 to 4, characterized in that the aqueous solution is irradiated during or after the treatment with the peroxidic oxidizing agent with ultraviolet light which essentially has a wavelength of 254 nm.

6. Process according to Claim 5, characterized in that the ultraviolet light originates from a mercury low-pressure lamp.

7. Process according to one of Claims 1 to 6, characterized in that processing waters from the amine oxide process are used as aqueous solution containing morpholine and N-methylmorpholine.

## Revendications

1. Procédé de préparation d'une solution de N-méthylmorpholine-N-oxyde dans l'eau, caractérisé par les étapes suivantes :
(a) on prévoit une solution aqueuse qui contient de la N-méthylmorpholine et de la morpholine et qui présente un pH compris entre 6,0 et 9,0, après quoi
(b) on traite cette solution aqueuse avec un oxydant peroxydique pour oxyder la N-méthylmorpholinc en N-méthylmorpholine-N-oxyde.

2. Procédé selon la revendication 1, caractérisé en ce que, dans l'étape (a), on utilise une solution aqueuse que l'on a fait passer sur un échangeur de cations qui peut absorber la morpholine, pour ajuster le pH.

3. Procédé selon la revendication 2, caractérisé en ce que l'échangeur de cations présente des groupes carboxyles.

4. Procédé selon la revendication 2, caractérisé en ce que l'échangeur de cations présente des groupes acide sulfonique.

5. Procédé selon l'une des revendications 1 à 4, caractérisé en ce que, pendant ou après le traitement avec l'oxydant peroxydique, on irradie la solution aqueuse avec une lumière ultraviolette qui présente essentiellement une longueur d'onde de 254 nm.

6. Procédé selon la revendication 5, caractérisé en ce que la lumière ultraviolette provient d'une lampe à mercure basse pression.

7. Procédé selon l'une des revendications 1 à 6, caractérisé en ce que l'on utilise comme solution aqueuse qui contient de la morpholine et de la N-morpholine de l'eau de procédé provenant du procédé à l'aminoxyde.
